# DEMANDE DE BREVET EUROPEEN

(11) **EP 2 785 156 A1**
(43) Date de publication de la demande: **01.10.2014**
(21) Numéro de dépôt: 14161343.0
(22) Date de dépôt: 24.03.2014
(51) Int. Cl.: H05K 1/02, B60H 1/22

(54) **Réchauffeur électrique pour véhicule automobile**

(30) Priorité: 26.03.2013 FR 1352719
(71) Demandeur: VALEO SYSTEMES THERMIQUES, 78320 Le Mesnil Saint-Denis (FR)
(72) Inventeur: Pierron, Frédéric, 78120 RAMBOUILLET (FR); Leborgne, José, 78990 ELANCOURT (FR); Tellier, Laurent, 75116 PARIS (FR)
(74) Mandataire: Pellegrini, Marie Claude

(57) **Abrégé**

L'invention concerne un réchauffeur électrique (1) de circuit de chauffage de véhicule automobile, comprenant un carter (2) délimitant un espace interne renfermant des composants électroniques de pilotage et/ou de puissance. Selon l'invention, ce cartes (2) comporte une membrane (12) en tissu de type imperméable et respirant qui est interposée entre son espace interne et l'environnement externe, de façon à permettre l'évacuation à travers cette membrane (12) d'humidité contenue dans l'espace interne vers l'extérieur tout en interdisant l'admission d'humidité depuis extérieur vers l'espace interne.

## Description

L'invention concerne un réchauffeur électrique destiné à équiper un circuit de chauffage de l'habitacle d'un véhicule.

Un tel réchauffeur électrique sert à chauffer l'habitacle d'un véhicule électrique ou hybride, en apportant par effet Joule de la chaleur au liquide caloporteur du circuit de chauffage de ce véhicule, ce circuit intégrant un radiateur pour dissiper cette chaleur vers l'habitacle.

Pour gérer la puissance thermique de réchauffage, un tel réchauffeur intègre des composants d'électronique de puissance et d'électronique de commande, pour injecter dans ses moyens de chauffage par effet Joule une puissance électrique correspondant à une valeur de consigne adressée par une unité centrale à l'électronique de commande de ce réchauffeur.

En pratique, l'électronique embarquée dans un tel réchauffeur est très fortement sollicitée, du fait qu'il constitue souvent la seule source de chauffage de l'habitacle, et qu'il est donc utilisé de façon à peu près continue à chaque utilisation du véhicule en hiver.

Le but de l'invention est d'apporter une solution pour améliorer à moindre coût la robustesse et la durée de vie d'un tel réchauffeur.

A cet effet, l'invention a pour objet un réchauffeur électrique de circuit de chauffage de véhicule automobile, comprenant un carter délimitant un espace interne renfermant des composants électroniques de pilotage et/ou de puissance, caractérisé en ce que ce carter comporte une membrane en tissu de type imperméable et respirant qui est interposée entre son espace interne et l'environnement externe, de façon à permettre l'évacuation à travers cette membrane d'humidité contenue dans l'espace interne vers l'extérieur tout en interdisant l'admission d'humidité depuis extérieur vers l'espace interne.

Avec cette solution, l'hygrométrie de l'environnement des composants électroniques est réduite tout au long de la vie du réchauffeur, ce qui permet d'en accroître sa longévité en évitant que de l'eau ne se condense sur les composants électroniques et/ou sur la carte de circuit imprimé qui les porte tout au long des cycles d'utilisation du réchauffeur.

L'invention concerne également un réchauffeur tel que défini ci-dessus, dans lequel la membrane est fabriquée dans un tissu capable de laisser passer vers l'extérieur plus de 3500 grammes de vapeur d'eau par mètre carré et par jour sous une humidité relative de 70% du côté intérieur.

L'invention concerne également un réchauffeur tel que défini ci-dessus, dans lequel la membrane se présente ici sous forme d'une pièce de tissu en forme de pastille ou analogue, qui est ainsi interposée entre l'espace interne et l'extérieur du réchauffeur.

L'invention concerne également un réchauffeur tel que défini ci-dessus, dans lequel le matériau utilisé pour la membrane est un matériau qui est à la fois imperméable et respirant : il est capable de laisser passer de l'humidité de l'intérieur vers l'extérieur, mais il est au contraire imperméable à l'eau dans le sens extérieur vers intérieur.

Ce matériau est préférentiellement fabriqué à partir d'un tissu ou assemblage utilisé notamment pour les vêtements de sports, un tel tissu qui a notamment été défini dans le document de brevet US3953566 est habituellement utilisé pour les vêtements de sports de montagne, du fait qu'il permet d'évacuer la transpiration sans pour autant laisser entrer l'humidité extérieure.

De tels tissus sont commercialisés notamment sous les noms commerciaux Gore-Tex par la société W. L. Gore & Associates, Dermizax par la société Toray Industries ou Sympatex par la société Akzo-Nobel.

L'invention concerne également un réchauffeur tel que défini ci-dessus, dans lequel le carter comporte un corps de carter fermé par un couvercle pour délimiter l'espace interne renfermant les composants électroniques, et dans lequel la membrane est fixée au couvercle en étant sertie ou collée au pourtour d'une ouverture correspondante de ce couvercle.

L'invention concerne également un réchauffeur tel que défini ci-dessus, dans lequel le couvercle a une forme générale plane.

L'idée à la base de l'invention est de réguler l'hygrométrie à l'intérieur de l'espace renfermant la carte électronique du réchauffeur de manière passive, grâce à une membrane capable de respirer de l'intérieur vers l'extérieur tout en étant imperméable de l'extérieur vers l'intérieur. Cette membrane permet ainsi d'évacuer vers l'extérieur l'humidité éventuellement présente dans l'espace renfermant les composants électroniques, tout en s'opposant à l'entrée d'humidité dans cet espace.

L'invention concerne également un système de chauffage de véhicule automobile comprenant un circuit de chauffage qui comprend un liquide caloporteur, ce circuit de chauffage comprenant au moins un radiateur pour dissiper la chaleur du liquide caloporteur vers l'habitacle, et d'un réchauffeur électrique tel que défini ci-dessus.

L'invention est appliquée au cas d'un réchauffeur électrique de circuit de chauffage et/ou d'organe de chauffage de véhicule automobile, mais elle s'applique aussi bien à d'autres types de boîtiers ou carters renfermant des composants d'électronique de commande et/ou de puissance.

La figure unique est une représentation schématique d'un réchauffeur selon l'invention.

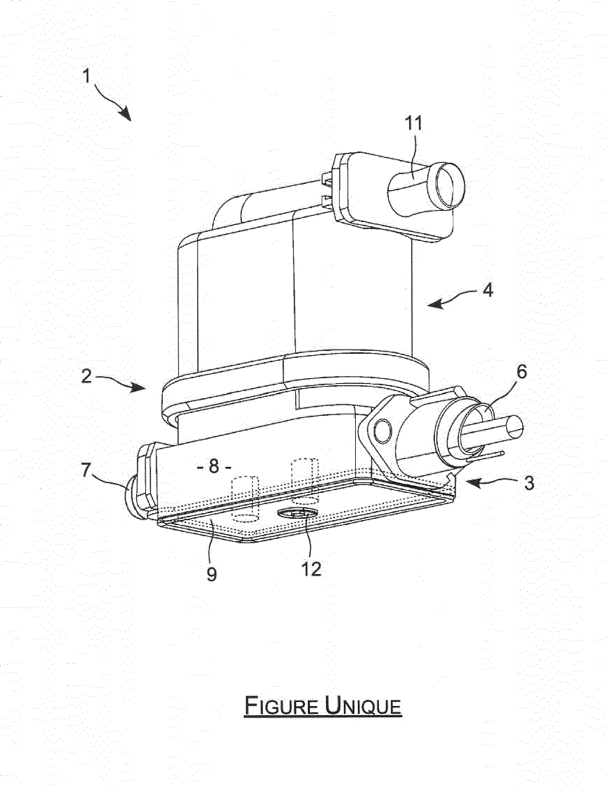

Le réchauffeur 1 selon l'invention qui est représenté dans la figure 1 comporte un boîtier ou carter 2 comprenant une partie basse 3 et une partie haute 4 coiffant cette partie basse 3. La partie basse 3 délimite un espace interne dans lequel sont montés les composants électroniques, ici réunis sur une carte d'électronique de puissance. Cette partie basse 3 comporte encore une entrée de câbles de puissance et de commande 6 ainsi qu'une admission de liquide caloporteur 7.

La partie basse 3 du carter est formée d'un corps 8 en alliage moulé fermé dans sa région supérieure et dont la face inférieure est ouverte, et d'un capot ou couvercle 9 fermant cette face inférieure de manière à délimiter conjointement avec ce corps 8 l'espace interne renfermant les composants électroniques.

Le liquide caloporteur reçu dans l'admission 7 est dirigé par des canaux non visibles vers la partie haute 4 du carter, afin d'y être réchauffé. L'espace intérieur dans lequel sont montés les éléments électroniques est complètement distinct et isolé des canaux par lesquels transite le liquide caloporteur.

Comme visible dans la figure 1, la partie haute 4 du carter 2 coiffe la partie basse 3 en étant rigidement solidarisée à celle-ci de façon étanche, de sorte que le liquide caloporteur reçu dans l'admission 7 de la partie basse est dirigé vers la partie haute 4. Cette partie haute 4 renferme un ou plusieurs éléments de chauffage par effet Joule alimentés par les composants d'électronique montés dans l'espace interne de la partie inférieure. 3. Le fluide admis dans l'embouchure 7 de la partie basse 3 du carter est ainsi transférée vers la partie haute 4 pour y être réchauffée avant évacuation.

La tenue dans le temps et les performances des composants électroniques montés dans l'espace interne de la partie basse 3 sont améliorés en abaissant l'hygrométrie dans l'environnement de ces composants électroniques. Ceci est assuré avec une membrane 12 en tissu respirant et imperméable qui ferme une ouverture réalisée dans le corps du capot 9, en étant scellée ou collée au pourtour de cette ouverture.

Cette membrane se présente ici sous forme d'une pièce de tissu 12 en forme de pastille ou analogue, qui est ainsi interposée entre l'espace interne et l'extérieur c'est-à-dire l'environnement du réchauffeur.

En pratique, au cours des cycles de fonctionnement du réchauffeur, l'humidité qui peut se retrouver piégée à l'intérieur de l'espace interne renfermant les composants électroniques est évacuée à travers la membrane 12. Ainsi, le niveau d'hygrométrie dans l'espace intérieur est maintenu à un niveau bas, ce qui permet de préserver les composants électroniques en améliorant leurs conditions de fonctionnement.

Concrètement, de l'humidité peut se retrouver piégée à l'intérieur de l'espace renfermant les composants de puissance, soit du fait que l'humidité ambiante est élevée lors de l'assemblage du réchauffeur. Mais cette humidité peut également atteindre l'espace interne du fait par exemple d'une légère fuite au niveau des jonctions des câbles électriques ou bien de la jointure du capot 9.

Le matériau utilisé pour la membrane 12 est un matériau qui est à la fois imperméable et respirant : il est capable de laisser passer de l'humidité de l'intérieur vers l'extérieur, mais il est au contraire imperméable à l'eau dans le sens extérieur vers intérieur.

Ce matériau est fabriqué à partir d'un tissu ou assemblage utilisé notamment pour les vêtements de sports, un tel tissu qui a notamment été défini dans le document de brevet US3953566 est habituellement utilisé pour les vêtements de sports de montagne, du fait qu'il permet d'évacuer la transpiration sans pour autant laisser entrer l'humidité extérieure.

De tels tissus sont commercialisés notamment sous les noms commerciaux Gore-Tex par la société W. L. Gore & Associates, Dermizax par la société Toray Industries ou Sympatex par la société Akzo-Nobel.

En pratique, le matériau Gore-Tex présente des qualités optimales, en étant capable d'évacuer vers l'extérieur plus de 3500 grammes de vapeur d'eau par mètre carré et par jour lorsque l'humidité relative est de 70% du côté intérieur.

Dans l'exemple des figures, l'invention est appliqué au cas d'un réchauffeur électrique de circuit de chauffage de véhicule automobile, mais elle s'applique aussi bien à d'autres types de boîtiers ou carters renfermant des composants d'électronique de commande et/ou de puissance.

## Revendications

1. Réchauffeur électrique (1) de circuit de chauffage de véhicule automobile, comprenant un carter (2) délimitant un espace interne renfermant des composants électroniques de pilotage et/ou de puissance, **caractérisé en ce que** ce carter (2) comporte une membrane (12) en tissu de type imperméable et respirant qui est interposée entre son espace interne et l'environnement externe, de façon à permettre l'évacuation à travers cette membrane (12) d'humidité contenue dans l'espace interne vers l'extérieur tout en interdisant l'admission d'humidité depuis extérieur vers l'espace interne.

2. Réchauffeur électrique (1) selon la revendication 1, dans lequel la membrane est fabriquée dans un tissu capable de laisser passer vers l'extérieur plus de 3500 grammes de vapeur d'eau par mètre carré et par jour sous une humidité relative de 70% du côté intérieur.

3. Réchauffeur électrique (1) selon la revendication 1 ou 2, dans lequel le carter (2) comporte un corps de carter (8) fermé par un couvercle (9) pour délimiter l'espace interne renfermant les composants électroniques, et dans lequel la membrane (12) est fixée au couvercle (9) en étant sertie ou collée au pourtour d'une ouverture correspondante de ce couvercle.

4. Réchauffeur électrique (1) selon la revendication 3, dans lequel le couvercle (9) a une forme générale plane.

5. Système de chauffage de véhicule automobile comprenant un circuit de chauffage qui comprend un liquide caloporteur, ce circuit de chauffage comprenant au moins un radiateur pour dissiper la chaleur du liquide caloporteur vers l'habitacle, et d'un réchauffeur électrique tel que défini à la revendication 1.
